(19) **Europäisches Patentamt / European Patent Office / Office européen des brevets**

(11) **EP 2 547 722 B1**

(12) **EUROPEAN PATENT SPECIFICATION**

(45) Date of publication and mention
of the grant of the patent:
**13.06.2018 Bulletin 2018/24**

(21) Application number: **11783407.7**

(22) Date of filing: **27.04.2011**

(51) Int Cl.:
**C08J 5/18** (2006.01)

(86) International application number:
**PCT/JP2011/060689**

(87) International publication number:
**WO 2011/145470 (24.11.2011 Gazette 2011/47)**

(54) **POLYMER POROUS FILM AND METHOD OF PRODUCING THE SAME**

PORÖSER POLYMERFILM UND VERFAHREN ZU SEINER HERSTELLUNG

FILM DE POLYMÈRE POREUX ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2010 JP 2010117844**

(43) Date of publication of application:
**23.01.2013 Bulletin 2013/04**

(73) Proprietor: **Canon Kabushiki Kaisha
Tokyo 146-8501 (JP)**

(72) Inventors:
• **MIYAUCHI, Yohei
Tokyo 146-8501 (JP)**
• **SATO, Naotake
Tokyo 146-8501 (JP)**

• **HASHIMOTO, Yuichi
Tokyo 146-8501 (JP)**
• **KIKUCHI, Toshihiro
Tokyo 146-8501 (JP)**
• **YOSHIMURA, Kimihiro
Tokyo 146-8501 (JP)**

(74) Representative: **WESER & Kollegen
Radeckestraße 43
81245 München (DE)**

(56) References cited:
**EP-A1- 2 060 317        WO-A1-2010/150794
JP-A- 2003 313 348        JP-A- 2004 315 660
JP-A- 2008 071 579        JP-A- 2009 235 159
US-A1- 2009 061 205**

## Description

## Technical Field

The present invention relates to a polymer porous film, which is used e.g. for a heat insulating material, a lightweight structural material, an adsorbing material, a sound absorbing material, or a catalyst carrier, and a method of producing the same.

## Background Art

A polymer porous film is produced in a combination of various polymer raw materials and porosification technologies. The polymer porous film exhibits a characteristic function depending e.g. on its porosity size, porosity ratio, or surface properties. For example, foamed bodies such as foamed polystyrene and foamed polyurethane are used as a lightweight structural material, a heat insulating material, or a buffer material in a wide range of fields such as houses, automobiles, and household appliances. Further, porous films having a finer porosity size from nanometer to micrometer are also used as separation membranes, permeable membranes, the separators for secondary cells, or hemodialysis membranes. Technological fields to which such porous film is applied are expanding year by year. For example, Japanese Patent Application Laid-Open No. 2008-071579 proposes a gas-selective permeable film characterized in that its porosity size shows a gradient change.

Recently, porous films are also developed particularly with respect to the so-called engineering plastics such as polymeric materials having heat resistance exceeding 200°C. Making use of properties such as high mechanical properties and chemical resistance, instances of application of such material are increasing even under a chemically or physically high load environment such as the aerospace industry or transportation vehicles. A porous film using such highly heat-resistant resin can be used with increased heat insulating property by increasing its porosity ratio to some extent, and hence evolution into various applications is under consideration, such as highly durability, heat-resistant filters, low-k films (low dielectric films) for electronic component substrates, and heat insulating materials of aerospace rockets.

In the printing field as well, such as electrophotography and printers, there are many environments having exposed to a large amount of a solvent under high temperature and high pressure, for example, a transfer and fixation portion for toner and discharge portions of dye in image forming apparatuses. In order to achieve a new printing system by enhancing functions of materials (such as an intermediate transfer belt, an organic photosensitive member, a roller, and an ink head) for forming those portions, it is required to use materials capable of withstanding the above-mentioned environments. Even at present, polyimides are usually used in an intermediate transfer belt of an electrophotographic apparatus.

As described above, in order to enhance the functions of materials, porosification of a resin is a very effective method. In order to develop a new printing mode that achieves, for example, energy saving, high speed, or high image quality by applying a porosified material to the printing field, it is very important to use an optimal material for the system by appropriately designing, for example, a porosity size, a foam structure, a porosity ratio, and uniformity of porosity sizes in a film thickness direction depending on a function desired to be exhibited. The term "foam structure" means, for example, an independent foam structure or a continuous foam structure.

For example, Japanese Patent Application Laid-Open No. 2006-133704 proposes inhibiting an increase in the surface temperature of a photosensitive member by providing a porous layer in a belt material serving as both an intermediate transfer member and a fixing member.

However, a porous film has an airspace in the film, and hence its mechanical strength is liable to deteriorate. Accordingly, even though a porous film has excellent functions such as high heat insulating property, a low dielectric constant, and high adsorptive property, mechanical durability, or impact resistance can hardly be compatible therewith. Therefore, members and applications to which the porous film is applicable are generally limited. For example, in the porous film in which porosity sizes show a gradient change proposed in Japanese Patent Application Laid-Open No. 2008-071579, mechanical strength is inhibited from deteriorating because the film is selectively permeable to gas and its porosity sizes are each close to the mean free path of gas. However, when the film is used as a heat insulating material, the film can exhibit heat insulating property that is only comparable to that of a nonporous film because of its extremely small porosity sizes. Further, the disclosed production method for the porous film is based on drying of a solvent, and hence the porous film is difficult to produce with its porosity sizes controlled so as to be gradient particularly when a high-boiling solvent is used. In addition, with the production method, there is a problem in that production of a structure of gradient porosity sizes from both surfaces as starting points is extremely difficult.

Further, there has also been proposed a film obtained by attaching films different in porosity size together so that porosity sizes show a gradient change. However, such film generates, with the origins at the attached portions, deterioration of the mechanical strength of the film and discontinuity in the porosity function of the film. Further, in the porous film produced by the method for porosification described in Japanese Patent Application Laid-Open No. 2006-133704, porosity morphology is not controlled, and hence the film has a macrovoid or a continuous porosity. Accordingly, the porous film is poor in mechanical strength and has no resistance against deformation or compression. As a result, the material deteriorates during printing. Therefore, it is difficult to use the porous film as a belt material for mass printing or high-speed printing.

**Citation List**

**Patent Literature**

[PTL 1] Japanese Patent Application Laid-Open No. 2008-071579
[PTL 2]Japanese Patent Application Laid-Open No. 2006-133704

EP 2 060 317 A1 and US 2009/061205 A1 disclose crystalline polymer microporous films, each comprising a plurality of pores penetrating through from a first surface to a second surface.
WO 2010/150794 A1 discloses a method of producing a porous polymer film, comprising forming a film of a solution containing a polymer, bringing a sheet in contact with the film, and making the film porous.

**Summary of Invention**

**Technical Problem**

In view of the foregoing, the present invention aims to solve the above-mentioned problems. That is, an object of the present invention is to provide a porous material excellent in heat insulating property, mechanical properties, and surface properties (such as adhesiveness and abrasion property) through the control of the functions of a porous film by setting the porosity sizes and porosity size distribution, and porosity ratio of the porous film within predetermined ranges. Another object of the present invention is to provide a method of producing the porous film, which can be used for a wide range of applications, including the case of using a high-boiling solvent, through efficient removal of a solvent via a solid-liquid interface in the production of the porous film. The use of the porous material for an electrophotographic material, in particular, an electrophotographic belt member allows the inhibition of thermal diffusion from toner to provide an electricity-saving and/or high-speed-printing image fixing apparatus.

**Solution to Problem**

Provided is the polymer porous film according to claims 1-4, and the method of production thereof according to claims 5-7.

**Advantageous Effects of Invention**

The present invention can provide the polymer porous film excellent e.g. in heat insulating property, mechanical properties, and surface properties through the control of the porosity sizes of porosities each formed of an independent foam structure so as to show a gradient change from the film surface in the porous structure of a resin composition formed of an engineering plastic, and the method of producing the polymer porous film. In particular, when the porous film has a porosity having the minimal porosity size in at least one film surface, there can be provided a material having excellent mechanical durability against external pressure and impact, while maintaining e.g. heat insulating property. Further, when the material of the present invention is used as an electrophotographic functional member, such an effect that heat insulating property or mechanical properties are asymmetric between both surfaces of the film can be exhibited. As a result, the image fixing apparatus capable of electricity saving, high-speed printing or mass printing can be provided.
Further features of the present invention will become apparent from the following description of exemplary embodiments with reference to the attached drawings.

**Brief Description of Drawings**

[Fig. 1] Fig. 1 is an SEM image of a cross-section of a resin composition described in Example 6 in the present invention.

[Fig. 2] Fig. 2 is a schematic configuration diagram illustrating an example of a fixation apparatus provided with an electrophotographic fixing member of the present invention.

[Fig. 3] Fig. 3 is an SEM image of a cross-section of a resin composition described in Example 1 in the present invention.

[Fig. 4] Fig. 4 is an SEM image of a cross-section of a resin composition described in Example 4 in the present invention.

[Fig. 5] Fig. 5 is an SEM image of a cross-section of a resin composition described in Example 8 in the present invention.

[Fig. 6A] Fig. 6A is a schematic diagram illustrating an embodiment of a cross-section of a porous film in the present invention.

[Fig. 6B] Fig. 6B is a schematic diagram illustrating an embodiment of a cross-section of a porous film in the present invention.

[Fig. 7A] Fig. 7A is a schematic diagram illustrating another embodiment of a cross-section of a porous film in the present invention.

[Fig. 7B] Fig. 7B is a schematic diagram illustrating another embodiment of a cross-section of a porous film in the present invention.

[Fig. 7C] Fig. 7C is a schematic diagram illustrating another embodiment of a cross-section of a porous film in the present invention.

## Description of Embodiments

In order to describe the present invention in detail, modes for carrying out the invention are hereinafter illustrated with reference to the drawings. It should be noted that separately disclosed embodiments are each an example in which a resin composition as the present invention, a laminated film including the resin composition, or an image forming apparatus using the laminated film as a component is actually used, and the technical scope of the present invention is not limited thereto.

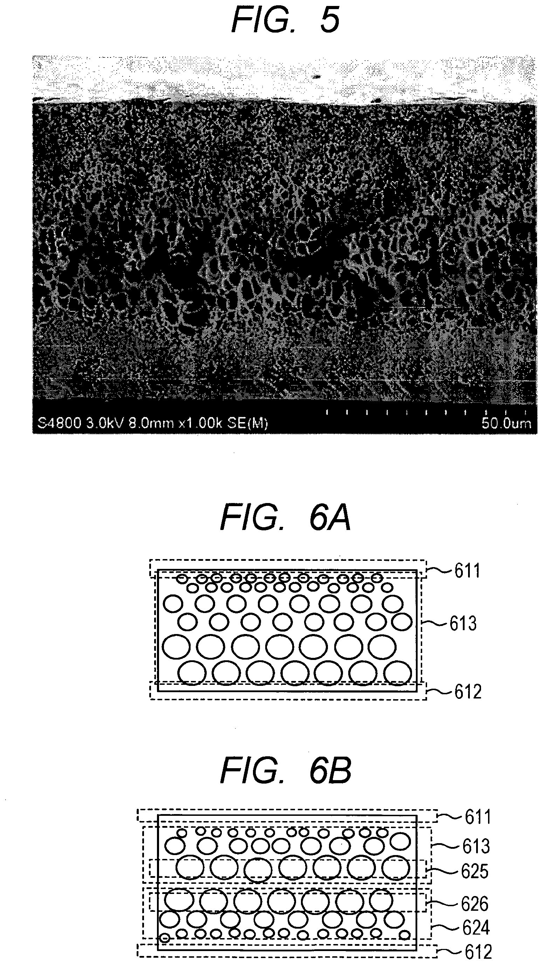

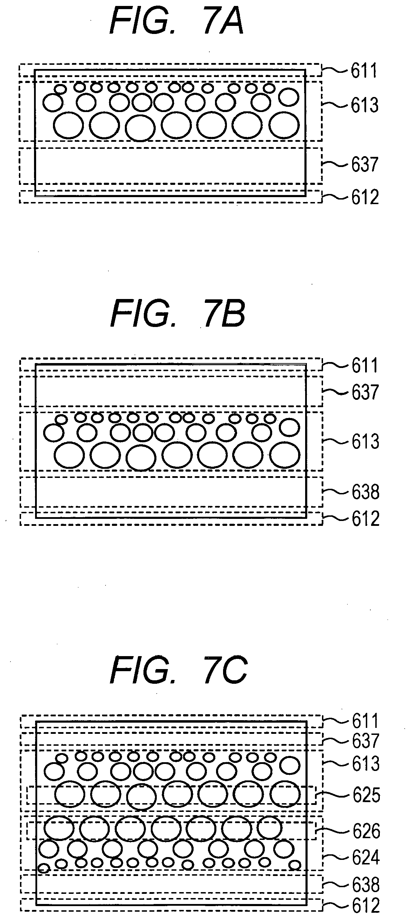

The structure of a porous film of the present invention is described based on Fig. 6A and Fig. 6B, and Fig. 7A, Fig. 7B, and Fig. 7C.

As illustrated in Fig. 6A, a first feature of the present invention is a polymer porous film of a single layer, including a first porosity size changing portion 613 formed of independent porosities each showing a gradual increase in porosity size across a region accounting for 10% or more of a film thickness from a first surface side 611 toward a second surface side 612. As illustrated in Fig. 6B, a second feature of the present invention is a polymer porous film further including a second porosity size changing portion 624 formed of independent porosities each showing a gradual decrease in porosity size across a region accounting for 10% or more of the film thickness from the first surface side 611 toward the second surface side 612, in which a maximal porosity size region 625 of the first porosity size changing portion 613 and a maximal porosity size region 626 of the second porosity size changing portion 624 are in contact with each other.

As illustrated in Fig. 7A to Fig. 7C, a third feature of the present invention is a polymer porous film further including a nonporous portion 637 or 638 across a region accounting for 10% or more of the film thickness on at least one of the first surface side 611 and the second surface side 612.

The term "porosity size changing portion" means a portion where porosity sizes show a gradual increase or decrease along the film thickness direction. As described later, the phrase "show a gradual increase or decrease" is not limited to the case where porosity sizes change as a linear function along the film thickness direction.

## Embodiment of the present invention

The resin composition in this embodiment is formed of a single polymer layer and is formed of a porous structure in which porosity sizes show a gradient change across a region accounting for 10% or more of a film thickness from one or both surfaces toward the inner side of the film. Alternatively, the resin composition in this embodiment is formed of a single polymer layer and is formed of a porous structure which has a nonporous portion made of a polymeric material across a region accounting for 10% or more of the film thickness from one or both surfaces toward the inner side of the film and in which porosity sizes show a gradient change from one nonporous portion toward the other nonporous portion or toward the opposite surface. The structure in which porosity sizes show a gradient change in this embodiment means a structure which has a minimal porosity size or a nonporous portion in at least one film surface portion and in which porosity sizes show a gradient increase toward the inner side of the film, in porosity arrangement in the film thickness direction. In view of the foregoing, at least the following five modes are included in this embodiment:

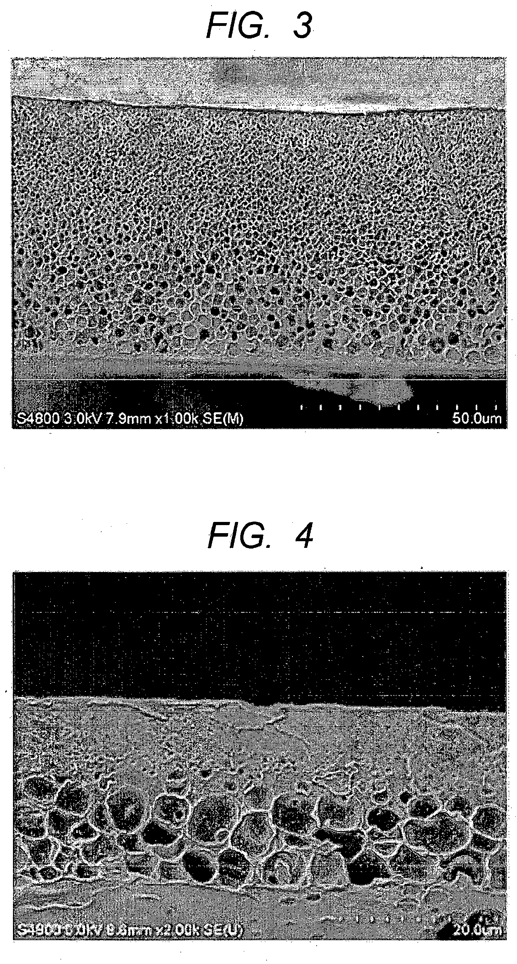

1) a mode in which porosity sizes show an increase from one surface to the other surface (see Fig. 3 and Fig. 6A);

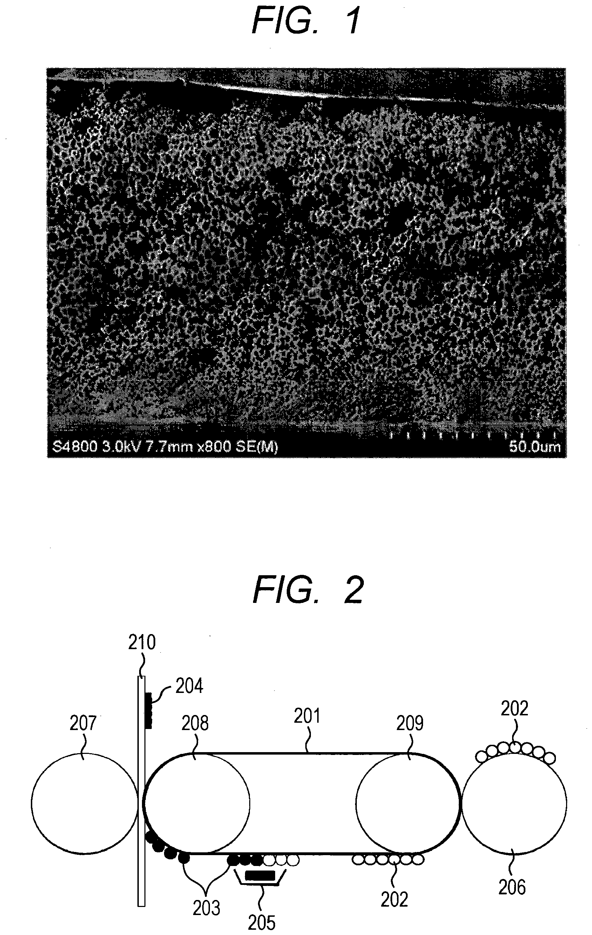

2) a mode in which porosity sizes show a gradient increase from one surface toward the film thickness direction to a certain depth and show a gradient decrease from a certain depth to the other surface (see Fig. 1 and Fig. 6B);
3) a mode in which porosity sizes show a continuous increase (meaning the same as "show a gradient increase") from one surface toward the film thickness direction to a certain depth and a nonporous portion of a polymeric material is formed from a certain depth to the other surface (see Fig. 5 and Fig. 7A);
4) a mode in which nonporous portions of a polymeric material are formed from both surfaces to a certain depth and porosity sizes show a gradient increase from one nonporous portion toward the other nonporous portion (see Fig. 4 and Fig. 7B); and
5) a mode in which nonporous portions of a polymeric material are formed from both surfaces to a certain depth and porosity sizes show a gradient increase from one nonporous portion toward the other nonporous portion to a certain depth and show a gradient decrease from a certain depth (see Fig. 4 and Fig. 7C).

Here, the phrase "show a gradient change" or "show a gradual increase" in porosity size mainly means that the porosity sizes show a linear and continuous increase or decrease. However, the porosity sizes may also show a hyperbolic change or an exponential change. Further, the term "single layer" refers to a single film produced by one process without, for example, attaching two or more kinds of films. Further, the term "nonporous portion" refers to a portion formed of a homogeneous polymeric material having no porosity.

The gradient porosity sizes allow different functions related to porosity, such as heat insulating property, specific gravity, and dielectric constant, between the surface and the inside of a film, or between both surfaces. Further, it is possible to provide, for example, a film having improved mechanical properties while having an equivalent function related to porosity, such as heat insulating property, to a porous film formed of a uniform porosity size.

Any one of the portion in which porosity sizes show a linear increase from the surface portion and the nonporous portion is preferably formed across a region accounting for 10% or more of the film thickness. When the ratio is less than 10%, the mechanical strength of the surface portion is insufficient, resulting in a lack of resistance e.g. against external pressure and physical stimulation.

Further, the porous structure in this embodiment is formed of independent porosities in which airspaces are separated by curved resin walls. In the independent porosities, individual porosities are each independent and a resin wall is provided between porosities. Accordingly, as compared to continuous porosities, not only the elastic modulus of the resin, but also the resin composition as a whole is expected to exhibit a high elastic modulus because of the effect of air pressure in the porosities. Further, the independent porosities can reduce migration of impurities generated e.g. in an image forming process from a first porosity to an adjacent second porosity. As a result, the appearance of material deterioration and a change in physical property can be inhibited. In addition, even when a bonding material is laminated, a laminated material can be inhibited from entering the inside of the film. Further, in the porous structure of this embodiment, independent porosities account for 80% or more of all porosities. Here, the term "independent porosity" refers to one in which a resin wall existing between adjacent first and second porosities has no holes therein.

The porosity sizes of the resin composition in this embodiment are each appropriately selected from the range of 0.1 $\mu$m or more and 10 $\mu$m or less. From the view point of heat insulating property, when a porosity size is equal to or less than a mean free path (65 nm for air), air contained in the porosity is reduced in thermal conductivity, and the inside can be regarded as a vacuum. On the other hand, however, when a porosity size is less than 0.1 $\mu$m, the configuration of the resin composition is similar to that of a nonporous film, and hence heat propagation by heat conduction via resin walls of porous portion increases. Accordingly, the resin composition as a whole is caused to increase in thermal conductivity. As a result, it is difficult to use the resin composition as a heat insulating material. Further, the porous structure of the resin composition of the present invention is a structure free of a macrovoid having a porosity size of more than 10 $\mu$m. When a macrovoid exists, the material is liable to deteriorate upon an external physical change such as compression or tension. Here, the term "macrovoid" refers to a nonuniform porosity having a porosity size of more than 10 $\mu$m and an unspecified structure. A method of measuring a porosity size in this embodiment is not particularly limited, and a conventional measuring method such as a mercury intrusion method or image analysis after an SEM observation may be used. A minimal porosity size and a maximal porosity size can each be calculated from the vicinity of a starting or terminal portion of a gradient change in porosity size by subjecting an SEM observation photograph of a film cross-section to image analysis. The porosity ratio of the resin composition of the present invention preferably falls within the range of 5% or more and 90% or less, particularly 20% or more and 60% or less. Here, the term "porosity ratio" is defined as a ratio of the volume of the porosities to the volume of the film. When the porosity ratio is excessively low, a reduction in thermal conductivity is inhibited, and hence heat insulating property cannot be exhibited. Further, when the porosity ratio is excessively high, the film is poor in mechanical strength, and hence it is difficult to use the film e.g. as an electrophotographic functional member. A method of measuring the porosity ratio in this embodiment is not particularly limited. For example, the porosity ratio may be calculated by a density measuring method.

A highly heat-resistant polymer to be used for the present invention is a functional resin having an upper temperature limit of 110°C or more, i.e., the so-called engineering plastic kind. Here, the term "upper temperature limit" refers to a temperature up to which a resin can be used continuously without causing deformation or deterioration, and, for example, refers to a glass transition temperature.

The engineering plastic to be used for the present invention is formed of a resin composition formed of a resin selected from the group consisting of polycarbonate, polyimide, polyamide-imide, polyamide, polyetherimide, polysulfone, and polyethersulfone or a resin combined thereof. Those resin compositions are each a material excellent e.g. in heat resistance, mechanical properties, and solvent resistance.

The inventors of the present invention have studied the optimal configuration for the case of using such material as a transfer member or a fixing belt member of an electrophotographic image forming apparatus. As a result, the inventors have found that the porous structure of the present invention can inhibit material deterioration and a change in physical property even when exposed to a heating or chemical environment, and moreover, the use of a porous film in which porosity sizes show a gradient change provides high mechanical strength even when the porosity ratio is set to a high value in order to improve heat insulating property.

Hereinafter, a method of producing the resin composition in the present invention is described in detail.

The resin composition is preferably produced using a phase separation method. A solution (resin solution) of a resin such as polycarbonate serving as a raw material is molded, and then the resultant is immersed in a coagulating solvent, thereby performing porosification. The shape into which the resin solution is molded may appropriately be selected. The molding is preferably performed by a method involving cast molding into a film shape. In addition, the cast film is immersed in the coagulating solvent in a state in which the solvent in the cast film is positively provided with a concentration gradient by covering the cast film with a predetermined covering sheet before the immersion in the coagulating solvent as described later. The immersion causes a change (phase transition) in the state of the film. The method is called the phase separation method. Here, the term "phase transition" refers to a phenomenon in which a resin precipitates as a solid through the immersion of a solution system in a coagulating solvent (poor solvent).

During the production of a porous film by the above-mentioned method the resin solution preferably has a viscosity of 5,700 mPa·s, or less, more preferably 5,000 mPa·s (cP) or less. As described later, when the resin has a high viscosity, the solvent in the resin solution cannot migrate to the covering sheet promptly, and hence a gradient in solvent concentration is not formed in the cast film of the resin solution. As a result, a structure of gradient porosity sizes cannot be produced.

In order that the porous film in which porosity sizes show a gradient change in the film thickness direction in the present invention may be produced, solvent concentration in the cast film is required to be made gradient along the thickness direction of the cast film before the cast film is immersed in the coagulating solvent. This is because the phase separation due to the gradient solvent concentration is believed to result in a gradient change in porosity size.

In the present invention, in order to achieve the above-mentioned phase separation state, the porous film is produced by a method involving immersing the cast film in a coagulating solvent while covered with a predetermined sheet.

Here, the predetermined sheet is one having an affinity to the solvent in the cast film and having such property that the solvent is efficiently removed from the cast film by saturating or dissolving the sheet in the solvent. Specific examples of such material include cellulose, nitrocellulose, and cellulose acetate, but are not limited thereto. The sheet has only to have an affinity to the resin solvent. Such a sheet that an SP value difference between the sheet and the resin solvent falls within the range of ±3 is particularly suitably used. Absorption via a solid-liquid interface through contact with the sheet unlike the evaporation of the solvent, which is via a gas-liquid interface, is carried out, and hence a concentration change of the solvent can be effectively formed. Further, a gradient structure can be produced generally even for a high-boiling solvent such as NMP.

A linear change in porosity size can be controlled by changing the film thickness or a covering time of the sheet. A portion having a low solvent concentration results in having small porosity sizes, which is close to a nonporous film. On the other hand, a portion having a high solvent concentration results in having large porosity sizes. Accordingly, porosity sizes can be appropriately changed by changing the film thickness and the covering time of the sheet, thereby controlling the capability of removing the solvent. On the other hand, as described above, when the resin solution has a high viscosity, migration of the solvent to the sheet is remarkably inhibited, and hence a porous film having porosity sizes showing a gradient change cannot be produced.

Here, a sheet having a film thickness of 5 $\mu$m to 500 $\mu$m, suitably 100 $\mu$m to 300 $\mu$m is used. When the film thickness is excessively small, effective removal of a solvent cannot be achieved. On the other hand, when the film thickness is excessively large, the surface of the cast film is roughened upon covering. The covering time may be appropriately adjusted between 10 seconds to 60 minutes.

In the present invention, the cast film is produced on the above-mentioned sheet having an ability to remove a solvent, and then a sheet may be further covered on a surface of the cast film to produce a porous film. In this case, a porous film in which porosity sizes show a gradient change from both surfaces toward the inner side of the film can be produced. The case allows the production of various gradient structures through the provision of differences in, for example, covering time and film thickness of the sheet between both surfaces.

Examples of the coagulating solvent include water, alcohols (such as methanol, ethanol, and propanol), hydrocarbons (such as hexane, cyclohexane, and heptane), ketones (such as acetone, butanone, and 2-butanone), and esters (such as ethyl acetate). Water is suitably used in terms of ease of handling and cost.

After having been immersed in the coagulating solvent for a given time, a precipitated film is taken out and the sheet is peeled off. After that, the film is fixed e.g. with a pin, a chuck, a pinch roll, or a pin tenter so as to prevent heat shrinkage. The film is then subjected to heat treatment to remove the remaining solvent. Thus, a polymer porous film can be obtained.

In the porous film thus obtained, porosity sizes show a linear change from a film surface toward the inner side of the film. A surface that has been covered with a sheet has a large removal ratio of the solvent and a low solvent concentration. Accordingly, the resultant porosity sizes are the smallest ones, and in some cases, a uniform film of a polymeric material is obtained. On the other hand, a portion at a certain depth from the film surface has a small removal ratio of the solvent compared to the surface, and hence, has a high solvent concentration, resulting in increased porosity sizes. When the sheet is covered on only one surface, the other surface, which is not covered with the sheet, eventually has the largest porosity sizes. Meanwhile, when the sheet is covered on both surfaces, an inner portion positioned at a certain depth from each of the surfaces eventually has the largest porosity sizes.

The application and shape of the resin composition of the present invention may be appropriately selected depending on its function. For example, a polyimide resin composition has high heat resistance, low dielectric constant, chemical resistance, and high mechanical strength, and hence may be used as an electrolyte film of a fuel battery or a support substrate for an electronic material as well as for a heat resistant filter, or a lightweight member for an automobile. Particularly when the resin composition is used e.g. for an electrophotographic fixing member as a heat insulating member, a belt shape is preferred. It should be noted that the resin composition may also be formed into a cylindrical shape or a cylinder shape to be used as it is as a fixing roller.

For example, the resin composition may be used in an image fixing apparatus having a simultaneous transfer and fixing system (hereinafter, also simply referred to as "fixing system") as illustrated in Fig. 2. The fixing system illustrated in Fig. 2 is one that heats toner from a releasing layer side by means of an external heating source. In such fixing system, a fixing belt is required to have a heat insulating layer in order to inhibit the following phenomenon. That is, the heat energy of the heated toner being conveyed diffuses out of the system and the temperature of the toner being conveyed lowers. The application of the porous film having gradient porosity sizes in the present invention to the fixing belt allows an efficient reduction in thermal conductivity by porosification only on the side where toner is transferred while maintaining a certain level of mechanical properties. In this system, toner alone has to be heated, and hence thermal diffusion into paper, which has conventionally been occurring, can be suppressed to perform the fixation of the toner with reduced electric power energy.

The apparatus illustrated in Fig. 2 includes a fixing belt 201, a heating source 205, a photosensitive drum 206, a pressing roller 207, a driving roller 208, and a charging roller 209. The fixing belt 201 is formed of the polymer porous film of the present invention. Toner 202 is transferred from the photosensitive drum 206 to the fixing belt 201. The fixing belt 201 is brought into pressure contact with by the pressing roller 207 to form a nip portion. The toner 202 heated by the heating source 205 turns into a molten state (molten toner 203) while maintaining its temperature and is moved to the nip portion to be fixed on a recording medium 210 to become fixed toner 204.

Other than the above-mentioned application, the porous film in the present invention is applicable not only to a belt material but also to resin members in general, such as an organic photosensitive member and a frame in the electrophotographic field.

Further, outside the electrophotographic field, the porous film can also be used as a low dielectric material having high mechanical strength in a covering material for an electronic component or an electric wire, as well as a lightweight material or a heat insulating material in a structural member for a transport vehicle or the aerospace industry or in a construction material. The porous film is potentially applicable to processing components in general each of which uses a heat resistant resin.

Further, the porous film has a region where independent porosities account for 80% or more of all porosities, and hence permeation of fluid (gas or liquid) in the film can substantially be blocked. That is, from a first surface side toward a second surface side of the film, suitable heat insulating property can be provided while blocking off gas or liquid. This creates an expectation of new applications different from those of conventional permeable films, such as a sheath material capable of holding fluid without a leakage while insulating heat.

## Examples

Hereinafter, the present invention is described in detail by way of examples. However, the present invention is not limited to these examples.

**Method of measuring porosity size**

Porosity size distribution (size distribution and number distribution of fine porosity sizes) and a ratio of independent porosities were calculated with an image processing system (LUZEX AP, manufactured by Nireco

Corporation) from an image obtained by observing a cross-section of a polymer porous film with a scanning electron microscope (SEM). A minimal porosity size and a maximal porosity size were each able to be analytically calculated e.g. from the vicinity of the starting or terminal portion of a gradient change in porosity size by subjecting an SEM observation photograph of the film cross-section to image analysis.

**Method of calculating porosity ratio**

A porosity ratio was calculated according to the following equation after measuring the film thickness and weight of a porous film cut into a 3 cm square. S represents the area of the porous film, d represents the film thickness, w represents the weight of the porous film, and D represents the density of a nonporous resin.

$$\text{Porosity ratio (\%)} = 100 - 100 \times w/(D \times S \times d)$$

**Method of measuring thermal conductivity**

A thermal conductivity was calculated by multiplying a thermal diffusivity measured with a thermal diffusivity measuring system (FTC-1, manufactured by ULVAC-RIKO, Inc.) by a separately determined density and specific heat.

**Method of calculating compression resistance**

As for each of a polyimide resin and a polyamide-imide resin, compression resistance was calculated from a film thickness change rate before and after compression performed with a high precision hot press (manufactured by TESTER SANGYO CO., LTD.) under conditions of a pressure of 7 kgf/cm$^2$, a compression temperature of 170°C, and a compression time of 4 hours. Further, as for a polycarbonate resin, compression resistance was calculated from a film thickness change rate before and after compression performed with a high precision hot press (TESTER SANGYO CO., LTD.) under conditions of a pressure of 7 kgf/cm$^2$, a treatment temperature of 70°C, and a compression time of 4 hours.

**Method of measuring viscosity**

Measurement of a viscosity was performed with a cone-plate rheometer Physica MCR-300 (manufactured by Anton Paar GmbH).

**Production of porous film**

**Example 1**

Polycarbonate (Z200, manufactured by Mitsubishi Gas Chemical Company, Inc) was dissolved in N-methylpyrrolidone (NMP) to prepare an 18 wt% solution. The solution had a viscosity of 300 mPa·s (cP). A polyester material (manufactured by Teijin Limited) was prepared as a substrate, and an application bar was used to make a cast film of the above-mentioned polycarbonate solution. The cast film was covered with a sheet (GSWP14250, Nihon Millipore K.K., 150 μm thick) made of cellulose nitrate and left to stand still for 200 seconds. After that, the cast film was immersed in distilled water while covered with the sheet and left to stand for 10 minutes. The substrate was taken out of water, the sheet was peeled off, and the resultant film was washed with distilled water.

Water remaining on the film was wiped off, the film was placed in a drying oven, and dried at a temperature of 80°C for 1 hour. The resultant film had a film thickness of 60 μm. Fig. 3 shows the result of observing a cross-section of the film with SEM (1,000×). Examination of the porosity morphology of the resultant film with the above-mentioned image processing system revealed that the minimal porosity size and the maximal porosity size were 0.23 μm and 2.8 μm, respectively. Further, the porosity ratio was 52%, and 82% of all porosities were independent porosities. From one surface toward the other surface, porosity sizes showed a linear, gradient change across the entire layer of the film. It should be noted that the temperature measurement was performed by bringing a thermocouple into contact with the substrate.

## Example 2

An N-methylpyrrolidone (NMP) solution of polyamic acid serving as a polyimide precursor (trade name: U-varnish A, manufactured by Ube Industries, Ltd.) having a resin concentration of 10 wt% was prepared. In this case, the solution had a viscosity of 950 mPa·s (cP). A polyimide material (trade name: Kapton, manufactured by Du Pont-Toray Co., Ltd.) having a thickness of 120 μm was prepared as a substrate, and an application bar was used to cast the above-mentioned polyamic acid varnish on the substrate. After that, the cast film was covered with a sheet (GSWP14250, Nihon Millipore K.K., 150 μm thick) made of cellulose nitrate and left to stand still for 300 seconds. After that, the cast film was immersed in distilled water while covered with the sheet and left to stand for 10 minutes. The substrate was taken out of water, the sheet was peeled off, and the resultant film was washed with distilled water.

Water remaining on the film was wiped off, and the film was placed in a drying oven. The film was dried at a temperature of 80°C for 1 hour. After that, the temperature was raised to 150°C at a rate of 10°C/minute. The film was heated at the temperature of 150°C for 30 minutes. After that, the temperature was raised to 250°C at a rate of 10°C/minute. The film was heated at the temperature of 250°C for 10 minutes. After that, the temperature was raised to 350°C at a rate of 10°C/minute. The film was heated at the temperature of 350°C for 10 minutes. Thus a polyimide resin composition was produced.

Examination of the porosity morphology of the resultant film revealed that the minimal porosity size and the maximal porosity size were 0.28 μm and 3.4 μm, respectively. Further, the porosity ratio was 52%, and the resultant film had a film thickness of 60 μm. 84% of all porosities were independent porosities. From one surface toward the other surface, porosity sizes showed a linear, gradient change across the entire layer of the film.

## Example 3

An N-methylpyrrolidone solution of polyamide-imide (HL-1210, manufactured by Hitachi Chemical Co., Ltd.) was prepared. The resin concentration was set to 10 wt%. In this case, the resin viscosity was 880 mPa·s (cP). A polyimide material (trade name: Kapton, manufactured by Du Pont-Toray Co., Ltd.) was prepared as a substrate, and an application bar was used to make a cast film of the above-mentioned polyamide-imide solution. After that, the cast film was covered with a sheet (GSWP14250, Nihon Millipore K.K., 150 μm thick) made of cellulose nitrate and left to stand still for 300 seconds. After that, the cast film was immersed in distilled water while covered with the sheet and left to stand for 10 minutes. The substrate was taken out of water, the sheet was peeled off, and the resultant film was washed with distilled water.

Water remaining on the film was wiped off, and the film was placed in a drying oven. The film was dried at a temperature of 80°C for 1 hour. After that, the temperature was raised to 150°C at a rate of 10°C/minute. The film was heated at the temperature of 150°C for 30 minutes. After that, the temperature was raised to 250°C at a rate of 10°C/minute. The film was heated at the temperature of 250°C for 10 minutes. Thus a polyamide-imide resin composition was produced.

Examination of the porosity morphology of the resultant film revealed that the minimal porosity size and the maximal porosity size were 0.22 μm and 3.2 μm, respectively. Further, the porosity ratio was 53%, and the resultant film had a film thickness of 50 μm. 83% of all porosities were independent porosities. From one surface toward the other surface, porosity sizes showed a linear, gradient change across the entire layer of the film.

## Example 4

A polycarbonate porous film was produced in the same way as in Example 1 except that the cast film was covered with the sheet (GSWP14250, Nihon Millipore K.K., 150 μm thick) made of cellulose nitrate and then left to stand still for 600 seconds.

Examination of the porosity morphology of the resultant film revealed that a uniform layer of a polymeric material having a thickness of 8 μm was contained in the layer and the maximal porosity size was 6.1 μm. Further, the porosity ratio was 38%, and the resultant film had a film thickness of 35 μm. Fig. 4 shows the result of observing a cross-section of the film with SEM (2,000×). 89% of all porosities were independent porosities. From a nonporous portion toward the other surface, porosity sizes showed a gradient change.

## Example 5

A polyimide porous film was produced in the same way as in Example 2 except that the cast film was covered with the sheet (GSWP14250, Nihon Millipore K.K., 150 μm thick) made of cellulose nitrate and then left to stand still for 700 seconds.

Examination of the porosity morphology of the resultant film revealed that a uniform layer of a polymeric material having a thickness of 7 μm was contained in the layer and the maximal porosity size was 7.7 μm. Further, the porosity

ratio was 41%, and the resultant film had a film thickness of 35 μm. 86% of all porosities were independent porosities. From a nonporous portion toward the other surface, porosity sizes showed a linear, gradient change.

## Example 6

Polycarbonate (Z200, manufactured by Mitsubishi Gas Chemical Company, Inc.) was dissolved in N-methylpyrrolidone (NMP) to prepare a 20 wt% solution. The solution had a viscosity of 320 mPa·s (cP). A sheet (GSWP14250, Nihon Millipore K.K., 150 μm thick) made of cellulose nitrate was used as a substrate, and an application bar was used to make a cast film of the above-mentioned polycarbonate solution. 20 seconds later, the cast film was covered with a sheet (GSWP14250, Nihon Millipore K.K., 150 μm thick) made of cellulose nitrate and left to stand still for 200 seconds. After that, the cast film was immersed in distilled water while covered on both sides with the sheets and left to stand for 10 minutes. The substrate was taken out of water, the sheets were peeled off, and the resultant film was washed with distilled water.

Water remaining on the film was wiped off, the film was placed in a drying oven, and dried at a temperature of 80°C for 1 hour. Examination of the porosity morphology of the resultant film revealed that the minimal porosity size and the maximal porosity size were 0.23 μm and 3.5 μm, respectively. Further, the porosity ratio was 49%, and the resultant film had a film thickness of 90 μm. Fig. 1 shows the result of observing a cross-section of the film with SEM (800×). From both surfaces toward the inner side of the film, porosity sizes showed an increase by a linear, gradient change across a distance of 45 μm. 82% of all porosities were independent porosities.

## Example 7

An N-methylpyrrolidone (NMP) solution of polyamic acid serving as a polyimide precursor (trade name: U-varnish A, manufactured by Ube Industries, Ltd.) having a resin concentration of 10 wt% was prepared. In this case, the solution had a viscosity of 900 mPa·s (cP). A sheet (GSWP14250, Nihon Millipore K.K., 150 μm thick) made of cellulose nitrate was used as a substrate, and an application bar was used to cast the above-mentioned polyamic acid varnish on the substrate. 20 seconds later, the cast film was covered with a sheet (GSWP14250, Nihon Millipore K.K., 150 μm thick) made of cellulose nitrate and left to stand still for 300 seconds. After that, the cast film was immersed in distilled water while covered with the sheets and left to stand for 10 minutes. The substrate was taken out of water, the sheets were peeled off, and the resultant film was washed with distilled water.

Water remaining on the film was wiped off, and the film was placed in a drying oven. The film was dried at a temperature of 80°C for 1 hour. After that, the temperature was raised to 150°C at a rate of 10°C/minute. The film was heated at the temperature of 150°C for 30 minutes. After that, the temperature was raised to 250°C at a rate of 10°C/minute. The film was heated at the temperature of 250°C for 10 minutes. After that, the temperature was raised to 350°C at a rate of 10°C/minute. The film was heated at the temperature of 350°C for 10 minutes. Thus a polyimide resin composition was produced.

Examination of the porosity morphology of the resultant film revealed that the minimal porosity size and the maximal porosity size were 0.26 μm and 3.8 μm, respectively. In addition, from both surfaces toward the inner side of the film, porosity sizes showed an increase by a linear, gradient change across a distance of 35 μm. Further, the porosity ratio was 47%, and the resultant film had a film thickness of 70 μm. 82% of all porosities were independent porosities.

## Example 8

A polycarbonate porous film was produced in the same way as in Example 6 except that the cast film was covered with the sheet made of cellulose nitrate on the opposite surface of the substrate surface and left to stand still for 380 seconds.

Examination of the porosity morphology of the resultant film revealed that a uniform layer of a polymeric material having a thickness of 10 μm was contained in the layer and the maximal porosity size was 7.4 μm. Further, the porosity ratio was 43%, and the resultant film had a film thickness of 70 μm. Fig. 5 shows the result of observing a cross-section of the film with SEM (1,000×). From both surfaces toward the inner side of the film, porosity sizes showed an increase by a linear, gradient change. 82% of all porosities were independent porosities.

## Example 9

A polyimide porous film was produced in the same way as in Example 7 except that the cast film was covered with the sheet made of cellulose nitrate on the opposite surface of the substrate surface and left to stand still for 480 seconds.

Examination of the porosity morphology of the resultant film revealed that a uniform layer of a polymeric material having a thickness of 15 $\mu$m was contained in the layer and the maximal porosity size was 7.3 $\mu$m. Further, the porosity ratio was 43%, and the resultant film had a film thickness of 90 $\mu$m. From both surfaces toward the inner side of the film, porosity sizes showed an increase by a linear, gradient change. 81% of all porosities were independent porosities.

**Example 10**

A polycarbonate porous film was produced in the same way as in Example 1 except that a solution in which a resin concentration was set to 23 wt% so as to achieve a viscosity of 1, 230 mPa·s (cP) was used. Examination of the porosity morphology of the resultant film revealed that the minimal porosity size and the maximal porosity size were 0.81 $\mu$m and 4.7 $\mu$m, respectively. In addition, from one surface of the film toward the other surface of the film, porosity sizes showed an increase by a linear, gradient change. Further, the porosity ratio was 47%, and the resultant film had a film thickness of 70 $\mu$m. 84% of all porosities were independent porosities.

**Example 11**

A polycarbonate porous film was produced in the same way as in Example 1 except that a solution in which a resin concentration was set to 28 wt% so as to achieve a viscosity of 3,800 mPa·s (cP) was used.
Examination of the porosity morphology of the resultant film revealed that the minimal porosity size and the maximal porosity size were 1.5 $\mu$m and 7.2 $\mu$m, respectively. In addition, from one surface of the film toward the other surface of the film, porosity sizes showed an increase by a linear, gradient change. Further, the porosity ratio was 45%, and the resultant film had a film thickness of 80 $\mu$m. 84% of all porosities were independent porosities.

**Example 12**

A polycarbonate porous film was produced in the same way as in Example 1 except that a solution in which a resin concentration was set to 32 wt% so as to achieve a viscosity of 5,700 mPa·s (cP) was used.
Examination of the porosity morphology of the resultant film revealed that the minimal porosity size and the maximal porosity size were 2.2 $\mu$m and 8.5 $\mu$m, respectively. In addition, from one surface of the film toward the other surface of the film, porosity sizes showed an increase by a linear, gradient change. Further, the porosity ratio was 45%, and the resultant film had a film thickness of 95 $\mu$m. 82% of all porosities were independent porosities.

**Example 13**

A polycarbonate porous film was produced in the same way as in Example 1 except that a sheet (microfiltration (MF) membrane filter) formed by cellulose acetate and cellulose nitrate was used as the sheet for covering the cast film.
Examination of the porosity morphology of the resultant film revealed that the minimal porosity size and the maximal porosity size were 0.24 $\mu$m and 2.5 $\mu$m, respectively. In addition, from one surface of the film toward the other surface of the film, porosity sizes showed an increase by a linear, gradient change. Further, the porosity ratio was 52%, and the resultant film had a film thickness of 40 $\mu$m. 82% of all porosities were independent porosities.

**Comparative Example 1**

Polycarbonate (Z200, manufactured by Mitsubishi Gas Chemical Company, Inc.) was dissolved in methanol to prepare an 18 wt% solution. The solution had a viscosity of 420 mPa·s (cP). A polyester material (manufactured by Teijin Limited) was prepared as a substrate, and an application bar was used to make a cast film of the above-mentioned polycarbonate solution. The cast film was left to stand for several minutes to evaporate methanol from the cast film. The cast film in this state was immersed in distilled water and left to stand for 10 minutes. After that, the substrate was taken out of water, and the resultant film was washed with distilled water.
Water remaining on the film was wiped off, the film was placed in a drying oven, and dried at a temperature of 80°C for 1 hour. Examination of the porosity morphology of the resultant film revealed that the minimal porosity size and the maximal porosity size were 0.010 $\mu$m and 0.055 $\mu$m, respectively. From one surface toward the other surface, porosity sizes showed an erratic, gradient change across the entire layer of the film, and the porosities were formed of continuous porosities. Further, the porosity ratio was 32%, and the resultant film had a film thickness of 60 $\mu$m.

**Comparative Example 2**

An N-methylpyrrolidone (NMP) solution of polyamic acid serving as a polyimide precursor (trade name: U-varnish A, manufactured by Ube Industries, Ltd.) having a resin concentration of 14 wt% was prepared. In this case, the solution had a viscosity of 1,800 mPa·s (cP). A polyimide material (trade name: Kapton, manufactured by Du Pont-Toray Co., Ltd.) having a thickness of 120 μm was prepared as a substrate, and an application bar was used to cast the above-mentioned polyamic acid varnish on the substrate. The cast film was left stand at 150°C for several minutes to evaporate NMP from the cast film. After that, the cast film was immersed in distilled water and left to stand for 10 minutes. The substrate was taken out of water, the sheet was peeled off, and the resultant film was washed with distilled water.

Water remaining on the film was wiped off, and the film was placed in a drying oven. The film was dried at a temperature of 80°C for 1 hour. After that, the temperature was raised to 150°C at a rate of 10°C/minute. The film was heated at the temperature of 150°C for 30 minutes. After that, the temperature was raised to 250°C at a rate of 10°C/minute. The film was heated at the temperature of 250°C for 10 minutes. After that, the temperature was raised to 350°C at a rate of 10°C/minute. The film was heated at the temperature of 350°C for 10 minutes. Thus a polyimide resin composition was produced.

Examination of the porosity morphology of the resultant film revealed that the minimal porosity size and the maximal porosity size were 0.003 μm and 0.045 μm, respectively. From one surface toward the other surface, porosity sizes showed an erratic, gradient change across the entire layer of the film, and the porosities were formed of continuous porosities.

Further, the porosity ratio was 38%, and the resultant film had a film thickness of 60 μm.

## Comparative Example 3

An N-methylpyrrolidone (NMP) solution of polyamic acid serving as a polyimide precursor (trade name: U-varnish A, manufactured by Ube Industries, Ltd.) having a resin concentration of 18 wt% was prepared. The solution had a viscosity of 7,800 mPa·s (cP). A polyimide material (trade name: Kapton, manufactured by Du Pont-Toray Co., Ltd.) having a thickness of 120 μm was prepared as a substrate, and an application bar was used to cast the above-mentioned polyamic acid varnish on the substrate. The cast film was immersed in distilled water while covered with a solvent displacement adjuster (polyolefin, Gurley value: 210 seconds/100 cc, manufactured by Ube Industries, Ltd.) for 10 minutes. The film was taken out of water, the solvent displacement adjuster was peeled off, and the resultant film was washed in distilled water.

Examination of the porosity morphology of the resultant film revealed that the porosities were formed of uniform, continuous porosities and the average porosity size was 0.50 μm. The film thickness was 45 μm and the porosity ratio was 47%.

## Comparative Example 4

A polyimide porous film was produced in the same way as in Comparative Example 3 except that a solvent displacement adjuster made of polyolefin having a Gurley value of 500 seconds/100 cc was used.

Examination of the porosity morphology of the resultant film revealed that the porosities were formed of uniform, continuous porosities and the average porosity size was 3.3 μm. The film thickness was 40 μm and the porosity ratio was 44%.

## Comparative Example 5

The two films obtained in Comparative Example 3 and Comparative Example 4 were attached together by means of a polyamide-imide primer, thereby affording a polyimide porous film having gradient porosity sizes.

The resin compositions (3 cm × 3 cm) obtained in Examples 1 to 13 and Comparative Examples 1 to 5 were each used to evaluate thermal conductivity, compression resistance, and thermal conductivity after compression. The compression resistance was evaluated after compression with a press machine under conditions of a pressure of 7 kgf/cm$^2$, a compression temperature of 170°C, and a compression time of 4 hours. Tables 1-1 and 1-2 show the results.

Table 1-1

| | Resin material | Solvent | Solution viscosity [mPa·s (cP)] | Sheet Material | Sheet-covered surface | Covering time [sec] | Maximal porosity size [$\mu$m] | Minimal porosity size [$\mu$m] | Porosity ratio [%] | Heat insulating proper -ty | Compression resistance | Thermal conductivity after compression |
|---|---|---|---|---|---|---|---|---|---|---|---|---|
| Example 1 | Polycarbonate | NMP | 300 | Nitrocellulose (150 $\mu$m) | One surface | 200 | 2.8 | 0.23 | 52 | A | B | B |
| Example 2 | Polyimide | NMP | 950 | Nitrocellulose (150 $\mu$m) | One surface | 300 | 3.4 | 0.28 | 51 | A | B | B |
| Example 3 | Polyamide-imide | NMP | 880 | Nitrocellulose (150 $\mu$m) | One surface | 300 | 3.2 | 0.22 | 53 | A | B | B |
| Example 4 | Polycarbonate | NMP | 300 | Nitrocellulose (150 $\mu$m) | One surface | 600 | 6.1 | Uniform | 38 | B | A | B |
| Example 5 | Polyimide | NMP | 950 | Nitrocellulose (150 $\mu$m) | One surface | 700 | 7.7 | Uniform | 41 | B | A | B |
| Example 6 | Polycarbonate | NMP | 320 | Nitrocellulose (150 $\mu$m) | Both surfaces | a) 200 b) 220 | 3.5 | 0.23 | 49 | A | A | A |
| Example 7 | Polyimide | NMP | 300 | Nitrocellulose (150 $\mu$m) | Both surfaces | a) 300 b) 320 | 3.8 | 0.26 | 47 | A | A | A |
| Example 8 | Polycarbonate | NMP | 300 | Nitrocellulose (150 $\mu$m) | Both surfaces | a) 200 b) 600 | 7.4 | Uniform | 42 | B | B | B |
| Example 9 | Polyimide | NMP | 300 | Nitrocellulose (150 $\mu$m) | Both surfaces | a) 200 b) 700 | 7.3 | Uniform | 43 | B | A | B |
| Example 10 | Polycarbonate | NMP | 1,230 | Nitrocellulose (150 $\mu$m) | One surface | 200 | 4.7 | 0.81 | 47 | A | B | B |
| Example 11 | Polycarbonate | NMP | 3,800 | Nitrocellulose (150 $\mu$m) | One surface | 200 | 7.2 | 1.5 | 45 | B | B | B |
| Example 12 | Polycarbonate | NMP | 5,700 | Nitrocellulose (150 $\mu$m) | One surface | 200 | 8.5 | 2.2 | 45 | B | B | B |
| Example 13 | Polycarbonate | NMP | 300 | Nitrocellulose and cellulose acetate | One surface | 200 | 2.5 | 0.24 | 52 | A | B | B |

(continued)

| | Resin material | Solvent | Solution viscosity [mPa·s (cP)] | Sheet Material | Sheet-covered surface | Covering time [sec] | Maximal porosity size [$\mu$m] | Minimal porosity size [$\mu$m] | Porosity ratio [%] | Heat insulating proper -ty | Compression resistance | Thermal con-ductivity after compression |
|---|---|---|---|---|---|---|---|---|---|---|---|---|
| Comparative Example 1 | Polycarbonate | Methanol | 420 | - | - | - | 0.055 | 0.010 | 32 | C | A | C |
| Comparative Example 2 | Polyimide | NMP | 1,800 | - | - | - | 0.045 | 0.003 | 38 | C | A | C |
| Comparative Example 3 | Polyimide | NMP | 7,800 | - | - | - | 0.50 | 0.50 | 47 | B | C | C |
| Comparative Example 4 | Polyimide | NMP | 7,800 | - | - | - | 3.3 | 3.3 | 44 | B | C | C |
| Comparative Example 5 | Polyimide | NMP | - | - | - | - | 3.3 | 0.50 | 46 | B | C | C |

In the column "covering time", a) represents "covering time for the surface opposite to the substrate" and b) represents "covering time for the surface on the side of the substrate".

For each of those examples, thermal conductivity and compression resistance (change rate of the film thickness before and after compression) were evaluated according to the criteria as described below.

Thermal conductivity $\lambda$ [W/mK]:

A: $\lambda < 0.05$,      B: $0.05 \leq \lambda < 0.075$,

C: $0.075 \leq \lambda < 0.1$,      D: $\lambda \geq 0.1$

Compression resistance (change rate of the film thickness before and after compression):

A = less than 1%,
B = 1% or more and less than 5%,
C = 5% or more and less than 10%,
D = 10% or more

Tables 1-1 and 1-2 revealed that a composition having gradient porosity sizes from both surfaces and small porosity sizes near both surfaces had excellent properties against compression while maintaining heat resistance. On the other hand, it was revealed that a composition having excessively small porosity sizes was poor in heat insulating property, and inversely, a composition having excessively large porosity sizes was poor in compression resistance.

**Example 14**

Lamination of PFA was carried out on the surface side having the smaller porosity sizes on the resin composition obtained in Example 2. A PFA dispersion (510 CL, manufactured by Du Pont-Mitsui Fluorochemicals Co., Ltd.) was applied onto the resin composition with a spraying apparatus and was heated at 350°C for 10 minutes to carry out the lamination. The thickness of the PFA film was measured and found to be 5 $\mu$m and the film had a surface roughness Rz of 0.5 $\mu$m. PFA is a copolymer of ethylene tetrafluoride ($C_2F_4$) and perfluoroalkoxyethylene. The surface roughness Rz is a ten point height of roughness profile.

**Example 15**

Lamination of PFA was carried out in the same way as in Example 14 except that the lamination was carried out on the surface side having the larger porosity sizes on the resin composition obtained in Example 2. The thickness of the PFA film was measured and found to be 5.2 $\mu$m and the film had a surface roughness Rz of 0.5 $\mu$m.

**Example 16**

Lamination of PFA was carried out in the same way as in Example 14 except that the lamination was carried out on the surface side having the smaller porosity sizes in the resin composition obtained in Example 5. The thickness of the PFA film was measured and found to be 5.5 $\mu$m and the film had a surface roughness Rz of 0.5 $\mu$m.

**Example 17**

Lamination of PFA was carried out in the same way as in Example 14 except that the lamination was carried out on the surface side having the smaller porosity sizes in the resin composition obtained in Example 7. The thickness of the PFA film was measured and found to be 5.3 $\mu$m and the film had a surface roughness Rz of 0.5 $\mu$m.

**Example 18**

Lamination of PFA was carried out in the same way as in Example 14 except that the lamination was carried out on the surface side having the smaller porosity sizes in the resin composition obtained in Example 9. The thickness of the PFA film was measured and found to be 5.5 $\mu$m and the film had a surface roughness Rz of 0.5 $\mu$m.

**Comparative Example 6**

Lamination of PFA was carried out in the same way as in Example 14 except that the resin composition obtained in Comparative Example 2 was used. The thickness of the PFA film was measured and found to be 5.5 $\mu$m and the film had a surface roughness Rz of 0.5 $\mu$m.

**Comparative Example 7**

Lamination of PFA was carried out in the same way as in Example 14 except that the lamination was carried out on the surface side having the smaller porosity sizes in the resin composition obtained in Comparative Example 5. The thickness of the PFA film was measured and found to be 5.5 $\mu$m and the film had a surface roughness Rz of 0.5 $\mu$m.

The resin compositions of Examples 14 to 18, and Comparative Examples 6 and 7 were each used to perform a fixing test. First, an image press C1 (manufactured by Canon Inc.) was used to transfer toner onto the resin composition. In the fixing test, the film onto which toner had been transferred was immobilized on an aluminum stage, heated with an 800 W halogen lamp for 100 milliseconds, and then the stage was moved at a speed of 360 mm/second, thereby examining the fixation on a medium after 100 milliseconds. The medium has such a configuration as to be fixed on an aluminum roller wrapped by an elastic rubber to form a nip portion with the aluminum stage. The fixation was performed with a pressure at the nip portion of 10 kgf/cm$^2$ and a pressurizing time of 10 milliseconds. Table 2 shows the results.

For those examples, evaluations were performed according to the criteria as described below.

Cover ratio: evaluated in terms of the residual ratio of toner on the medium when the fixed matter at the thousandth fixation was cross-folded and the printed matter was rubbed with brass wrapped by lens-cleaning paper.

A=toner residual ratio after test of 90% or more,
B=toner residual ratio after test of 75% or more and less than 90%,
C=toner residual ratio of 50% or more and less than 75%,
D=toner residual ratio of less than 50%

Change rate of the film thickness: change rate of the film thickness of the resin composition laminated at the thousandth fixation with respect to at the initial.

A=less than 1%,
B=1% or more and less than 5%,
C=5% or more and less than 10%,
D=10% or more

Table 2

|  | Cover ratio [%] | Change rate of the film thickness [%] |
|---|---|---|
| Example 14 | B | B |
| Example 15 | C | A |
| Example 16 | A | A |
| Example 17 | B | A |
| Example 18 | B | A |
| Comparative Example 6 | D | A |
| Comparative Example 7 | D | D |

Table 2 revealed that a composition having small porosity sizes in the surface is excellent in cover ratio (toner residual ratio) and change rate of the film thickness. The composition was revealed to serve as a belt material excellent in heat insulating property by its high toner residual ratio. The composition was revealed to serve as a belt material excellent in compression resistance by its low change rate of the film thickness. It was also revealed that lowering the heat conductivity of the surface on which toner was placed improved fixing property.

On the other hand, a composition which was obtained by merely attaching films was poor in mechanical properties and the film was broken during the fixation test.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A polymer porous film of a single layer, comprising:

a first porosity size changing portion (613) formed of independent porosities separated in any direction and having a size distribution showing a gradual increase in porosity size from a first surface side (611) toward a second surface side (612) across a region accounting for 10% or more of a film thickness, wherein the porosity size falls within a range of 0.1 to 10 μm, and the polymer porous film is formed of a resin composition formed of a resin selected from the group consisting of polycarbonate, polyimide, polyamide-imide, polyamide, polyetherimide, polysulfone, and polyethersulfone or a resin combined thereof.

2. The polymer porous film according to claim 1, wherein:

the polymer porous film further comprises a second porosity size changing portion (624) formed of independent porosities separated in any direction and having a size distribution showing a gradual decrease in porosity size from the first surface side toward the second surface side across a region accounting for 10% or more of the film thickness; and a maximal porosity size region (625) of the first porosity size changing portion and a maximal porosity size region (626) of the second porosity size changing portion are in contact with each other.

3. The polymer porous film according to claim 1 or 2, wherein the polymer porous film further comprises a nonporous portion (637, 638) across a region accounting for 10% or more of the film thickness on at least one of the first surface side and the second surface side.

4. The polymer porous film according to any one of claims 1 to 3, wherein a ratio of the volume of the porosities to the volume of the film falls within a range of 5% or more and 90% or less.

5. A method of producing the polymer porous film of any one of claims 1 to 4, the method comprising:

forming a film of a solution containing a polymer formed of a resin selected from the group consisting of polycarbonate, polyimide, polyamide-imide, polyamide, polyetherimide, polysulfone, and polyethersulfone or a resin combined thereof, wherein a viscosity of the solution containing the polymer is set to 5,700 mPa·s or less; bringing one or both surfaces of the film for a predetermined covering time between 10 seconds and 60 minutes into contact with a sheet having a thickness between 5 μm and 500 μm that absorbs a solvent selectively with respect to a solute so that a solvent concentration is gradient in the film thickness direction; and porosifying the film by immersion in a coagulating solvent and removal of the remaining solvent after the contact with the sheet, thereby producing the polymer porous film having gradient porosity sizes in the direction in which the solvent concentration was gradient.

6. The method according to claim 5, wherein the viscosity of the solution containing the polymer is set to 5,000 mPa·s or less.

7. The method according to claim 5 or 6, wherein the polymer is formed of a resin of polycarbonate or polyimide.

## Patentansprüche

1. Einschichtige poröse Polymerschicht, umfassend:

einen ersten Abschnitt (613) sich ändernder Porositätsgrößen, gebildet aus unabhängigen Porositäten, die in jede Richtung getrennt sind und deren Größenverteilung eine graduelle Zunahme der Porositätsgröße in einem Gebiet, das 10 % oder mehr der Schichtdicke ausmacht, von einer ersten Oberfläche (611) in Richtung einer zweiten Oberfläche (612) zeigt, wobei die Porositätsgröße zwischen 0,1 und 10 μm beträgt, und die poröse Polymerschicht aus einer Harzzusammensetzung gebildet ist, die aus einem Harz von Polycarbonat, Polyimid, Polyamidimid, Polyamid, Polyetherimid, Polysulfon oder Polyethersulfon oder einem daraus zusammengesetzten Harz gebildet ist.

**2.** Die poröse Polymerschicht nach Anspruch 1, wobei:

die poröse Polymerschicht ferner einen zweiten Abschnitt (624) sich ändernder Porositätsgrößen umfasst, der aus unabhängigen, in jede Richtung getrennten Porositäten gebildet ist, deren Größenverteilung in einem Gebiet, das 10 % oder mehr der Schichtdicke ausmacht, eine graduelle Abnahme der Porositätsgröße von der ersten Seite der Oberfläche in Richtung der zweiten Seite der Oberfläche zeigt; und
ein Gebiet (625) maximaler Porositätsgröße des ersten Abschnitts sich ändernder Porositätsgröße und ein Gebiet (626) maximaler Porositätsgröße des zweiten Abschnitts sich ändernder Porositätsgröße sich miteinander in Kontakt befinden.

**3.** Poröse Polymerschicht nach Anspruch 1 oder 2, wobei die poröse Polymerschicht ferner einen nicht porösen Abschnitt (637, 638) in einem Gebiet, das auf der ersten Seite der Oberfläche und/oder auf der zweiten Seite der Oberfläche 10 % oder mehr der Schichtdicke ausmacht, umfasst.

**4.** Poröse Polymerschicht nach einem der Ansprüche 1 bis 3, wobei ein Verhältnis zwischen dem Volumen der Porositäten und dem Volumen der Schicht in einem Bereich zwischen 5 % oder mehr und 90 % oder weniger liegt.

**5.** Verfahren zum Herstellen der porösen Polymerschicht nach einem der Ansprüche 1 bis 4, wobei das Verfahren umfasst:

Bilden einer Schicht aus einer Lösung, die ein Polymer enthält, das aus einem Harz von Polycarbonat, Polyimid, Polyamidimid, Polyamid, Polyetherimid, Polysulfon und Polyethersulfon oder einem daraus zusammengesetztes Harz gebildet ist, wobei eine Viskosität der das Polymer enthaltenden Lösung auf 5700 mPa·s oder weniger festgesetzt ist;
in Kontakt Bringen einer oder beider Oberflächen der Schicht für eine vorbestimmte Abdeckzeit zwischen 10 Sekunden und 60 Minuten mit einem Bogen, dessen Dicke zwischen 5 $\mu$m und 500 $\mu$m beträgt und der spezifisch ein Lösungsmittel bezüglich eines gelösten Stoffes absorbiert, sodass eine Konzentration des Lösungsmittels in Richtung der Schichtdicke einen Gradienten bildet; und
Porösmachen der Schicht durch Eintauchen in ein Koagulationslösungsmittel und Entfernen des restlichen Lösungsmittels nach dem Kontakt mit dem Bogen, wodurch die poröse Polymerschicht erzeugt wird, deren Porositätsgrößen in der Richtung einen Gradienten bilden, in der die Konzentration des Lösungsmittels einen Gradienten gebildet hat.

**6.** Verfahren nach Anspruch 5, wobei die Viskosität der das Polymer enthaltenden Lösung auf 5000 mPa·s oder weniger gesetzt ist.

**7.** Verfahren nach einem der Ansprüche 5 oder 6, wobei das Polymer aus einem Polycarbonat- oder Polyimidharz gebildet ist.

## Revendications

**1.** Film poreux polymère de simple couche, comprenant :

une première partie de changement de taille de porosité (613) formée de porosités indépendantes séparées dans n'importe quelle direction et ayant une distribution de taille montrant une augmentation graduelle de la porosité de taille d'un premier côté de surface (611) vers un second côté de surface (612) à travers une région comptant pour 10 % ou plus d'une épaisseur de film,
où la taille de porosité se situe dans une plage de 0,1 à 10 $\mu$m, et
le film poreux polymère étant formé d'une composition de résine formée d'une résine choisie dans le groupe constitué par le polycarbonate, le polyimide, le polyamide-imide, le polyamide, le polyétherimide, la polysulfone, et la polyéthersulfone ou une résine combinée de ceux-ci.

**2.** Film poreux polymère selon la revendication 1, où :

le film poreux polymère comprend en outre une seconde partie de changement de taille de porosité (624) formée de porosités indépendantes séparées dans n'importe quelle direction et ayant une distribution de taille montrant une diminution graduelle de la taille de porosité du premier côté de surface vers le second côté de surface à travers une région comptant pour 10 % ou plus d'une épaisseur de film ; et
une région de taille de porosité maximale (625) de la première partie de changement de taille de porosité et une région de taille de porosité maximale (626) de la seconde partie de changement de taille de porosité sont en contact l'une avec l'autre.

3. Film poreux polymère selon la revendication 1 ou 2, le film poreux polymère comprenant en outre une partie non poreuse (637, 638) à travers une région comptant pour 10 % ou plus de l'épaisseur de film sur au moins un du premier côté de surface et du second côté de surface.

4. Film poreux polymère selon l'une quelconque des revendications 1 à 3, dans lequel un rapport du volume des porosités au volume du film se situe dans une plage de 5 % ou plus et de 90 % ou moins.

5. Procédé de production du film poreux polymère selon l'une quelconque des revendications 1 à 4, le procédé comprenant :

la formation d'un film d'une solution contenant un polymère formé d'une résine choisie dans le groupe constitué par le polycarbonate, le polyimide, le polyamide-imide, le polyamide, le polyétherimide, la polysulfone, et la polyéthersulfone ou une résine combinée de ceux-ci, où une viscosité de la solution contenant le polymère est établie à 5700 mPa·s ou moins ;

la mise en contact d'une ou des deux surfaces du film durant un temps de recouvrement prédéterminé entre 10 secondes et 60 minutes avec une feuille ayant une épaisseur entre 5 $\mu$m et 500 $\mu$m qui absorbe un solvant sélectivement par rapport à un soluté de sorte qu'une concentration de solvant est en gradient dans la direction de l'épaisseur de film ; et

la porosification du film par immersion dans un solvant de coagulation et l'élimination du solvant restant après le contact avec la feuille, produisant ainsi le film poreux polymère ayant des tailles de porosité en gradient dans la direction dans laquelle la concentration de solvant était en gradient.

6. Procédé selon la revendication 5, dans lequel la viscosité de la solution contenant le polymère est établie à 5000 mPa·s ou moins.

7. Procédé selon la revendication 5 ou 6, dans lequel le polymère est formé d'une résine de polycarbonate ou de polyimide.

# FIG. 1

S4800 3.0kV 7.7mm x800 SE(M)    50.0um

# FIG. 2

## FIG. 3

## FIG. 4

# FIG. 5

S4800 3.0kV 8.0mm x1.00k SE(M)　　　　　　　　　50.0um

# FIG. 6A

# FIG. 6B

## FIG. 7A

~611
~613
~637
~612

## FIG. 7B

~611
~637
~613
~638
~612

## FIG. 7C

~611
~637
~613
~625
~626
~624
~638
~612

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008071579 A
- JP 2006133704 A
- EP 2060317 A1
- US 2009061205 A1
- WO 2010150794 A1